# EUROPÄISCHE PATENTSCHRIFT

(11) **EP 2 686 580 B1**
(45) Veröffentlichungstag und Bekanntmachung des Hinweises auf die Patenterteilung: **29.06.2016**
(21) Anmeldenummer: 12700598.1
(22) Anmeldetag: 11.01.2012
(51) Int. Cl.: F16H 57/031, F16H 57/04

(54) **GETRIEBEVORRICHTUNG**
TRANSMISSION DEVICE
DISPOSITIF DE TRANSMISSION

(30) Priorität: 17.03.2011 DE 102011014376; 11.05.2011 CN 201120147753 U
(43) Veröffentlichungstag der Anmeldung: 22.01.2014
(73) Patentinhaber: Sew-Eurodrive GmbH & Co. KG, 76646 Bruchsal (DE)
(72) Erfinder: WU, Zili, 300060 Tianjin (CN)
(86) Internationale Anmeldenummer: PCT/EP2012/000103
(87) Internationale Veröffentlichungsnummer: WO 2012/123046

(56) Entgegenhaltungen:
- EP-A2- 1 610 031
- DE-A1- 3 209 514
- DE-A1-102005 031 197
- DE-A1-102008 017 755
- US-A- 2 511 479
- US-A- 2 699 841
- US-A- 2 756 614
- US-A- 2 832 230

## Beschreibung

Die Erfindung betrifft eine Getriebevorrichtung.

Es ist allgemein bekannt, dass Getriebe Vezahnungsteile aufweisen, so dass im Betrieb Wärme erzeugt wird, die ans Getriebeöl zumindest teilweise abfließt.

Aus der DE 32 09 514 A1 ist eine Getriebeanlage mit Druckschmierung bekannt, enthalt und eine Getriebevorrichtung mit einem zentralen Gehäuseteil, in welchem ein erstes Lager einer abtreibenden Welle aufgenommen ist, wobei im zentralen Gehäuseteil zumindest ein erster und ein zweiter Kanal vorgesehen sind, wobei der erste Kanal von einem am zentralen Gehäuseteil vorgesehenen Öltank zu einer Anschlussvorrichtung für eine Ölpumpe führt, wobei der zweite Kanal von einer weiteren Anschlussvorrichtung für die Ölpumpe zu einem Hohlraumbereich führt, welcher vom zentralen Gehäuseteil und einem Lagerdeckel begrenzt ist, wobei zwischen Lagerdeckel und zentralem Gehäuseteil der von Öl durchströmte Hohlraumbereich ausgebildet ist, wobei am zentralen Gehäuseteil eine ebene Berührfläche ausgebildet ist und der Lagerdeckel mit seiner entsprechend ebenen Berührfläche auf die ebene Berührfläche des zentralen Gehäuseteils aufgesetzt ist, wobei die ebene Berührfläche des zentralen Gehäuseteils eine Ausnehmung umfasst, die zumindest ein Teilbereich des Hohlraumbereichs ist, in welchen der innerhalb des zentralen Gehäuseteil verlaufende zweite Kanal mündet, wobei die Ausnehmung im zentralen Gehäuseteil als Vertiefung in die ebene Berührfläche des zentralen Gehäuseteils eingebracht ist, wobei die ebenen Berührflächen des zentralen Gehäuseteils und des Lagerdeckels eine durch den Lagerdeckel und das zentrale Gehäuseteil durchgehende Bohrung aufweisen zur Durchführung einer eintreibenden Welle, wobei die Bohrung beabstandet ist von der Ausnehmung.

Aus der US 2 511 479 A sind Kühlmittel für ein Getriebe bekannt.

Aus der US 2 699 841 A ist eine Geschwindigkeitswechseleinheit bekannt mit Schmierungsvorrichtung hierfür.

Aus der US 2 832 230 A ist ein Getriebe mit vertikaler Abtriebswelle bekannt.

Aus der US 2 756 614 A ist ein Getriebe bekannt.

Aus der EP 1 610 031 A2 ist eine Schmierung für eine Geschwindigkeitswechseleinrichtung bekannt.

Aus der DE 10 2008 017 755 A1 ist eine Kühlanordnung für ein Getriebe bekannt.

Aus der DE 10 2005 031 197 A1 ist ein Antrieb mit Lüfter bekannt.

Der Erfindung liegt daher die Aufgabe zugrunde, ein Getriebe kompakt weiterzubilden.

Erfindungsgemäß wird die Aufgabe bei der Getriebevorrichtung nach den in Anspruch 1 angegebenen Merkmalen gelöst.

Wichtige Merkmale der Erfindung bei der Getriebevorrichtung sind, dass die Getriebevorrichtung, insbesondere Getriebe, mit einem zentralen Gehäuseteil, in welchem ein erstes Lager, insbesondere unteres Lager, einer Welle der Getriebevorrichtung, insbesondere der abtreibenden Welle, aufgenommen ist,
wobei im zentralen Gehäuseteil zumindest ein erster und ein zweiter Kanal vorgesehen ist, insbesondere jeweils ein aus radial und axial verlaufenden Bohrungsabschnitten zusammengesetzter Kanal, insbesondere mit entsprechend in den Abschnitten angeordneten Verschlussstopfen,
wobei der erste Kanal von einem am zentralen Gehäuseteil vorgesehenen Öltank zu einer Anschlussvorrichtung für eine Ölpumpe führt,
wobei der zweite Kanal von einer Anschlussvorrichtung, insbesondere von einer weiteren Anschlussvorrichtung, für die Ölpumpe zu einem Hohlraumbereich führt, welcher vom zentralen Gehäuseteil und einem Lagerdeckel begrenzt ist.

Von Vorteil ist dabei, dass im zentralen Gehäuseteil die Kanäle geführt sind und somit eine separate Verrohrung entbehrlich ist.

Der Lagerdeckel ist auf das zentrale Gehäuseteil aufgesetzt und schraubverbunden,
wobei der Lagerdeckel die axialen Stirnseite der abtreibenden Welle und/oder einer Zwischenwelle gehäusebildend abdeckt,
wobei zwischen Lagerdeckel und zentralem Gehäuseteil ein von Öl durchströmter Hohlraumbereich, insbesondere Öltasche, ausgebildet ist. Von Vorteil ist dabei, dass eine effektive Kühlung erreichbar ist.

Am zentralen Gehäuseteil ist eine ebene Berührfläche ausgebildet, in der Bohrungen eingebracht sind und der Lagerdeckel mit seiner entsprechend ebenen Berührfläche auf die ebene Berührfläche des zentralen Gehäuseteils aufgesetzt und mittels in die Bohrungen schraubverbundenen Schrauben verbunden ist,
wobei die ebene Berührfläche des zentralen Gehäuseteils und/oder die ebene Berührfläche an der Innenseite des Lagerdeckels jeweils eine Ausnehmung umfasst, die zumindest ein Teilbereich des Hohlraumbereichs ist, in welchen zumindest ein innerhalb des zentralen Gehäuseteil verlaufender Kanal mündet,
wobei die Ausnehmung als Vertiefung in die ebene Berührfläche des zentralen Gehäuseteils eingebracht ist. Von Vorteil ist dabei, dass eine einfache Verbindung herstellbar ist.

Die ebenen Berührflächen des zentralen Gehäuseteils und des Lagerdeckels weigen eise Bohrung, insbesondere durch den Lagerdeckel und/oder das zentrale Gehäuseteil durchgehende Bohrung, auf zur Durchführung der eintreibenden Welle,
wobei die Bohrung beabstandet ist von der Ausnehmung. Von Vorteil ist dabei, dass eine besonders einfach herstellbare, kostengünstige und einfach abdichtbare Schnittstelle geschaffen ist zwischen Lagerdeckel und zentralem Gehäuseteil.

Bei einer vorteilhaften Ausgestaltung ist im zentralen Gehäuseteil ein Kanal vorgesehen, insbesondere ein aus radial und axial verlaufenden Bohrungsabschnitten zusammengesetzter Kanal, wobei der Kanal von einer ersten Seite, insbesondere Oberseite, der Getriebevorrichtrung zum Bereich der Lageraufnahme des Lagers führt. Von Vorteil ist dabei, dass die Fettschmierung in einfacher und kostengünstiger Weise ausführbar ist. Insbesondere muss nicht von der Seite des Lagers her eine Fettschmierung ausgeführt werden sondern es genügt die Fettschmierung von der anderen Seite her auszuführen.

Bei einer vorteilhaften Ausgestaltung ist das Lager fettgeschmiert, wobei die Nachschmierung durch Einleitung von Fett in den Mündungsberiech an der Oberseite der Getriebevorrichtung ausführbar ist, insbesondere wobei im Mündungsbereich des Kanals ein Anschlussmittel für Fettschmierung, insbesondere Druckschmierung, angeordnet ist. Von Vorteil ist dabei, dass eine Wartungsschmierung in einfacher Weise ausführbar ist, wobei nach Beendigung der Wartungsschmierung der Fettkanal verschlossen bleibt und somit das Eindringen von Schmutz verhindert ist.

Bei einer vorteilhaften Ausgestaltung ist die Welle über ein zweites Lager gelagert, insbesondere dessen Lageraufnahme im zentralen Gehäuseteil angeordnet ist, wobei das zweite Lager axial zwischen der Mündung des Kanals auf der ersten Seite und dem Lager angeordnet ist. Von Vorteil ist dabei, dass die Fettschmierung auf der vom Lager abgewandten Seite des Getriebes ausführbar ist.

Bei einer vorteilhaften Ausgestaltung ist Lageraufnahmebereich des ersten Lagers im zentralen Gehäuseteil auf der der ersten Seite gegenüberliegenden Seite angeordnet, also einen Abschnitt der dortigen Außenwand der Getriebevorrichtung umfasst. Von Vorteil ist dabei, dass der Fettschmierkanal im zentralen Gehäuseteil geführt ist, also keine zusätzlichen Rohrelemente benötigt werden und die Schmierung eines Lagers ermöglicht ist, das auf einer schwer zugänglichen Seite des Getriebes angeordnet ist.

Bei einer vorteilhaften Ausgestaltung weist die Getriebevorrichtung ein zentrales Gehäuseteil auf, welches ein Lager einer abtreibenden und ein Lager einer eintreibenden Welle aufnimmt,
wobei im Getriebegehäuse ein Öltank angeordnet ist, der zumindest teilweise begrenzt ist durch das zentrale Gehäuseteil.

Von Vorteil ist dabei, dass im unteren Teil des Getriebes ein Öltank vorgesehen ist, in welchem das Öl sich ansammelt und somit ein Ansaugrohr einer Ölpumpe ständig mit Öl versorgbar ist, also das Ansaugen von Luft vermieden wird. Außerdem ermöglicht der Öltank die Beruhigung von Ölschaum, also die Separation von Luft und Öl. Der Öltank ist im Getriebe integriert, da er durch das zentrale Gehäuseteil zumindest teilweise begrenzt ist. Außerdem ist er in einem Beriech des Getriebes vorsehbar, wo keine Funktionsteile sind, also kein Raumbereich für die Funktion des Getriebes benötigt werden.

Bei einer vorteilhaften Ausgestaltung weist die Getriebevorrichtung derart montiert ist in einer Maschine oder Anlage, insbesondere Kühlturmanlage, dass die abtreibende Welle nach unten, also in Gravitationsrichtung, herausragt aus dem Gehäuse der Getriebevorrichtung. Von Vorteil ist dabei, dass am nach unten herausragenden Endbereich ein Lüfter eines Kühlturms antreibbar ist und somit die Unterseite dem Luftstrom dieses Lüfters aussetzbar ist. Außerdem ist das untere Lager der abtreibenden Welle fettschmierbar und mittels Labyrinthdichtung abdichtbar.

Bei einer vorteilhaften Ausgestaltung ist der Öltank durch das zentrale Gehäuseteil und ein mit diesem dicht verbundenen Gehäusedeckel begrenzt. Von Vorteil ist dabei, dass der Öltank durch dichtes Verbinden, insbesondere Schraubverbinden, des Gehäusedeckels mit dem zentralen Gehäuseteil herstellbar ist.

Bei einer vorteilhaften Ausgestaltung ist der Öltank über einen Kanal mit einer Ölpumpe verbunden, wobei der Kanal als Ausnehmung im zentralen Gehäuseteil ausgebildet ist, insbesondere wobei der Kanal aus Bohrungsabschnitten, insbesondere axial, also parallel zur Achsrichtung der abtreibenden Welle, und hierzu transversal verlaufenden Bohrungsabschnitten, zusammengesetzt ist. Von Vorteil ist dabei, dass die Kanäle in einfacher Weise herstellbar sind. Außerdem sind die Kanäle im zentralen Gehäuseteil integriert ausgebildet und es ist keine separate Verrohrung zur Ölführung notwendig. Das Öl ist also innerhalb des zentralen Gehäuseteils geführt und temperiert somit auch direkt das zentrale Gehäuseteil. Durch thermische Unterschiede, also unterschiedliche Temperaturen an verschiedenen Positionen des Gehäuseteils, bedingte Spannungen werden also vermindert.

Bei einer vorteilhaften Ausgestaltung sind im zentralen Gehäuseteil Kanäle ausgebildet, die vom Getriebeinnenraum in den Öltank münden,
insbesondere wobei die Kanäle jeweils aus Bohrungsabschnitten, insbesondere axial, also parallel zur Achsrichtung der abtreibenden Welle, und hierzu transversal verlaufenden Bohrungsabschnitten, zusammengesetzt sind. Von Vorteil ist dabei, dass in einfacher Weise ein Rückfluss des Öls in den Öltank erreichbar ist.

Bei einer vorteilhaften Ausgestaltung verläuft im zentralen Gehäuseteil ein Kanal von der Ölpumpe an die Oberseite der Getriebevorrichtung, wobei der Mündungsbereich von einem Lagerdeckel abgedeckt ist, der auch die Stirnseite eines der axialen Endbereiche der abtreibenden Welle abdeckt, und in einen Raumbereich, insbesondere Öltasche, mündet, der zumindest vom zentralen Gehäuseteil und vom Lagerdeckel begrenzt ist. Von Vorteil ist dabei, dass eine schmale Öltasche gebildet ist, die von dem dünnen Lagerdeckel geschützt ist und von Öl durchströmt ist. Somit ist eine hervorragende und effektive Kühlung des Öls erreichbar.

Bei einer vorteilhaften Ausgestaltung führen aus dem Raumbereich Kanäle zu zu schmierenden und/oder zu kühlenden Bereichen im Innenraum der Getriebevorrichtung, insbesondere zu einem Lager und/oder zu einem Bereich von miteinander im Eingriff stehenden Verzahnungen. Von Vorteil ist dabei, dass das gekühlte Öl den Bereichen zur Schmierung und Kühlung zuführbar ist.

Bei einer vorteilhaften Ausgestaltung ist auf der eintreibenden Welle ein Lüfter formschlüssig und/oder kraftschlüssig verbunden, dessen Kühlluftstrom am Lagerdeckel vorbeiströmt, insbesondere wobei der Kühlluftstrom durch Ausnehmungen eines Laternenflansch durchtritt, insbesondere in zur eintreibenden Welle radialer Richtung, insbesondere wobei der Laternenflansch mit dem Gehäuse, insbesondere mit dem zentralen Gehäuseteil der Getriebevorrichtung verbunden ist und an seiner von der Getriebevorrichtung abgewandten Seite mit einem Motorgehäuse verbunden ist. Von Vorteil ist dabei, dass eine effektive Kühlung bewirkbar ist.

Bei einer vorteilhaften Ausgestaltung ist das zentrale Gehäuseteil zweistückig ausgeführt, wobei zumindest ein Kanal vom oberen Stück ins untere Stück durchgeführt ist. Von Vorteil ist dabei, dass die beiden Stücke dicht verbunden sind und somit Öl durchführbar ist. Vorzugswiese wird eine Dichtung im Verbindungbereich des oberen und unteren Stücks angeordnet.

Bei einer vorteilhaften Ausgestaltung weist das untere Stück des zentralen Gehäuseteils an seiner Unterseite Kühlrippen auf, insbesondere wobei an einer den Öltank zumindest teilweise begrenzenden Wand des unteren Stücks Kühlrippen ausgebildet sind und/oder wobei an einer die Lageraufnahme zumindest teilweise begrenzenden Wand des unteren Stücks Kühlrippen ausgebildet sind. Von Vorteil ist dabei, dass eine besonders effektive Kühlung des Öltanks und des abtriebsseitigen Lagers bewirkbar ist. Außerdem sind die Kühlrippen an der Unterseite dem Kühlluftstrom des auf der abtreibenden Welle vorgesehenen Lüfters ausgesetzt und somit eine effektive Kühlung erreichbar.

Bei einer vorteilhaften Ausgestaltung ist an der Oberseite des oberen Stücks eine wellenartige Struktur als oberflächenvergrößernder Bereich ausgebildet. Von Vorteil ist dabei, dass eine verbesserte Kühlung erreichbar ist.

Bei einer vorteilhaften Ausgestaltung ist an der Außenseite des Lagerdeckels eine wellenartige Struktur als oberflächenvergrößernder Bereich ausgebildet, die im Kühlluftstrom des Lüfters angeordnet ist. Von Vorteil ist dabei, dass eine verbesserte Kühlung erreichbar ist.

Bei einer vorteilhaften Ausgestaltung ist ein Gehäusedeckel mit dem unteren und dem oberen Stück des zentralen Gehäuseteils verbunden, wobei der Gehäusedeckel seitlich angeordnet ist und/oder eine wellenartige Struktur als oberflächenvergrößernder Bereich aufweist. Von Vorteil ist dabei, dass eine verbesserte Entwärmung und eine leichtere Montage des Getriebes ermöglicht ist.

Bei einer vorteilhaften Ausgestaltung ist im zentralen Gehäuseteil ein Kanal vorgesehen, insbesondere ein aus radial und axial verlaufenden Bohrungsabschnitten zusammengesetzter Kanal,
wobei der Kanal vom oberen Stück ins untere Stück durchgeführt ist,
wobei der Kanal von der Oberseite zum Bereich des unteren Lagers der abtreibenden Welle führt, welches fettgeschmiert ist, wobei die Nachschmierung durch Einleitung von Fett in den Mündungsberiech an der Oberseite der Getriebevorrichtung ausführbar ist. Von Vorteil ist dabei, dass der Kanal bei zweistückiger Ausführung vom oberen ins untere Stück übergeht und eine Druckschmierung mit Fett ausführbar ist. Dabei ist vorteiligerweise die Verbindung vom Kanalabschnitt des oberen zum Kanalabschnitt des unteren Stücks des zentralen Gehäuseteils dicht ausgeführt.

Bei einer vorteilhaften Ausgestaltung ist am zentralen Gehäuseteil, insbesondere an einem Eckbereich des quaderförmig ausgebildeten unteren Stücks, insbesondere am unteren Stück, ein Befestigungsbereich einstückig ausgeformt, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist. Von Vorteil ist dabei, dass ein vergrößerter Bereich für die Befestigung des Getriebes an einem festen Teil ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmögüchkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

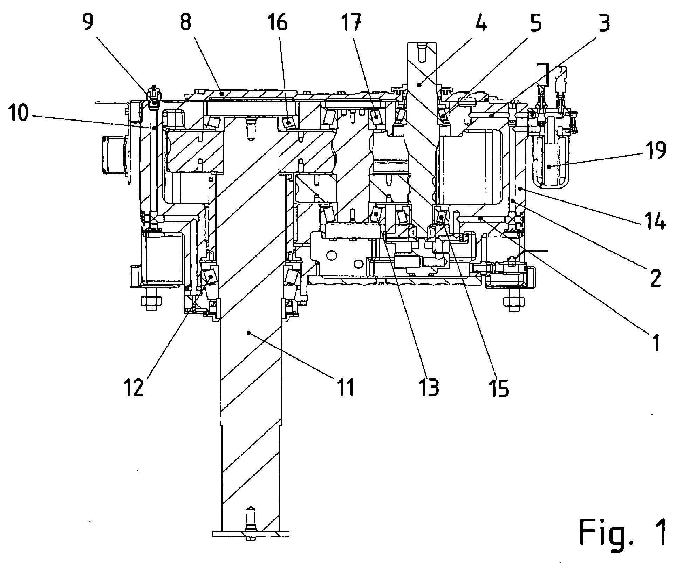

In der Figur 1 ist ein Querschnitt durch ein erfindungsgemäßes Getriebe gezeigt, wobei ein eintriebsseitiger Laternenflansch und ein von ihm gehäusebildend umgebene, auf der eintreibenden Welle vorgesehene Lüfter ausgeblendet sind.

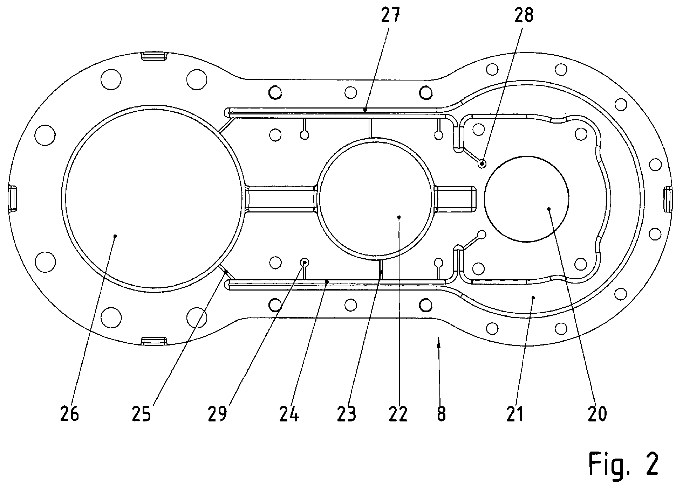

In der Figur 2 ist die eine Draufsicht auf die Innenseite des Lagerdeckels 8 gezeigt.

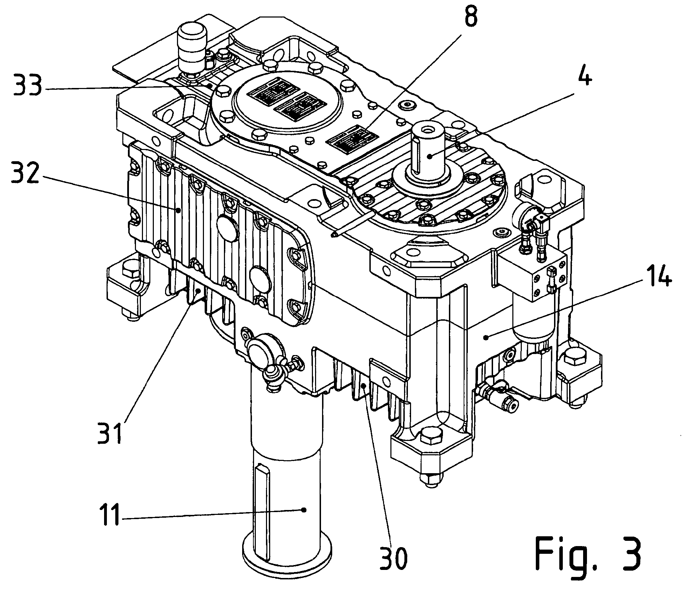

In der Figur 3 ist eine Schrägansicht auf das Getriebe gezeigt.

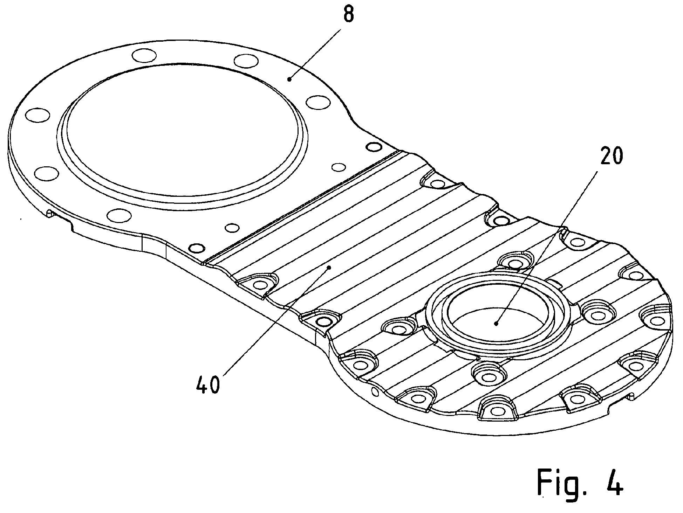

In der Figur 4 ist eine Schrägansicht auf die Außenseite des Lagerdeckels 8 gezeigt.

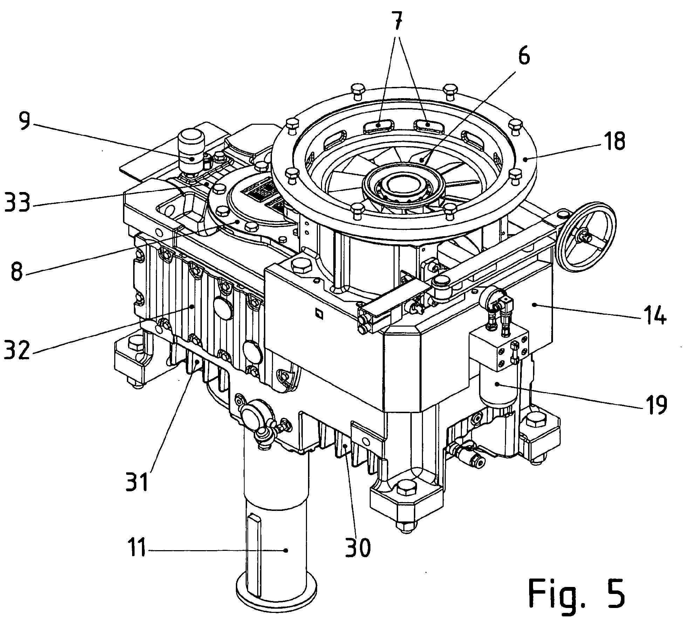

In der Figur 5 ist eine Schrägansicht auf die Außenseite des erfindungsgemäßen Getriebes gezeigt, wobei der eintriebsseitige Laternenflansch und der von ihm gehäusebildend umgebene, auf der eintreibenden Welle vorgesehene Lüfter dargestellt sind.

Dabei ist ein zentrales Gehäuseteil 14 vorgesehen, welches Lager der Wellen des Getriebes aufnimmt und an Bereichen seiner Außenoberfläche Kühlrippen und oberflächenvergrößernde wellenartige Ausformungen aufweist.

Die eintreibende Welle 4 ist über ein Lager 5 und ein Lager 15 im zentralen Gehäuseteil 14 gelagert und weist axial zwischen den Lagern 5 und 15 eine Ritzelverzahnung auf. Alternativ ist dort auch ein eintreibendes Verzahnteil kraftschlüssig und/oder formschlüssig verbindbar.

Diese Ritzelverzahnung beziehungsweise dieses Verzahnteil ist im Eingriff mit einem Verzahnteil einer Zwischenwelle, die über Lager (5, 13) ebenfalls im zentralen Gehäuseteil 14 aufgenommen ist. Dabei befindet sich das Verzahnteil der Zwischenwelle und ein weiteres Verzahnteil der Zwischenwelle axial wiederum zwischen den Lagern (5, 13).

Das weitere auf der Zwischenwelle kraftschlüssig und/oder formschlüssig verbundene Verzahnteil steht im Eingriff mit einem Verzahnteil, das kraftschlüssig und/oder formschlüssig mit der abtreibenden Welle 11 verbunden ist.

Vorzugsweise ist die Bauform, also die Ausrichtung des Getriebes in der das Getriebe umfassenden Maschine oder Anlage derart, dass die abtreibende Welle nach unten, also in Gravitationsrichtung, herausragt.

Die abtreibende Welle ist über ein unteres Lager 12 und ein oberes Lager 16 im zentralen Gehäuseteil 14 gelagert.

Im axialen Bereich des unteren Lagers 12 ist eine Fettschmierung vorgesehen. Hierzu sind Bohrkanäle 10 im zentralen Gehäuseteil 14 ausgeführt, so dass ein Kanal von der Oberseite zum axialen Bereich des unteren Lagers gebildet ist. Der Kanal 10 mündet an der Oberseite über eine Anschlussvorrichtung für Fettschmierung, die auch verschließbar ist. Auf diese Weise ist bei Wartung des Getriebes Fett unter Druck einbringbar und somit der axiale Bereich des Lagers auf der unteren Seite in komfortabler Weise von der anderen Seite des Getriebes, also der Oberseite, aus versorgbar. Daher darf das Getriebe in eine derartige Maschine oder Anlage eingebaut werden" in welcher die Unterseite unzugänglich ist. Trotzdem ist eine Wartungsschmierung in einfacher Weise ermöglicht. Insgesamt ist der Kanal 10 aus axial und radial verlaufenden Teilabschnitten zusammengesetzt, die jeweils als Bohrungen ausgeführt sind, wobei bei durchgehenden Bohrungen die jeweils ungenutzten Endbereiche der Bohrungen verschlossen sind, vorzugsweise mit einem Verschlussstopfen.

An der Oberseite ist ein Lagerdeckel 8 vorgesehen, welcher die Lageraufnahmebereiche der Lager 5, 16 und 17 abdeckt, wobei im vom Lagerdeckel 8 abgedeckten Oberflächenbereich des zentralen Gehäuseteils 14 eine Nutenstruktur eingearbeitet ist, so dass nach Aufsetzen des Lagerdeckels 8 Kanäle zum Durchleiten des Öls gebildet sind. Außerdem ist in dem abgedeckten Oberflächenbereich auch eine großflächige Vertiefung ausgebildet, so dass ein flacher Raumbereich zur Aufnahme von Öl gebildet ist, in welchen die Kanäle münden.

Alternativ oder zusätzlich ist die Nutenstruktur und die flächige Ausnehmung auch auf der Innenseite des Lagerdeckels 8 ausgebildet.
Dabei weist der Lagerdeckel 8 eine Ausnehmung 20 zur Durchführung der eintreibenden Welle auf, so dass oberhalb des zentralen Gehäuseteils 14 an der eintreibenden Welle ein Lüfter 6 verbunden, insbesondere kraftschlüssig und/oder formschlüssig, ist. Somit ist dieser Lüfter 6 in einem Gehäuseteil gehäusebildend umgeben, das als Laternenflansch 18 mit radial nach außen gerichteten Ausnehmungen 7 ausgebildet ist und auf das zentrale Gehäuseteil 14 aufgesetzt und verbunden ist.
Der vom Lüfter 6 erzeugte Luftstrom strömt am Lagerdeckel 8 vorbei, das an seiner Außenseite eine oberflächenvergrößernde wellige Kühlstruktur aufweist. Somit wird das an der Innenseite des Lagerdeckels 8 vorhandene Öl beim Durchströmen des flächigen Raumbereichs 21, insbesondere also eines taschenartigen Raumbereichs, gekühlt.

Der Lagerdeckel 8 ist im Bereich der Stirnseiten der Zwischenwelle und der abtreibenden Welle geschlossen ausgeführt und stellt somit eine Abdeckung 22 des Wellenendes der Zwischenwelle und Abdeckung 26 der abtreibenden Welle dar.

Aus dem Raumbereich 21 führen Ölkanäle 24 und 27 heraus und sind verbunden mit den Nuten (23, 25, 28, 29) zur Ölführung, mittels welcher Öl zu den Lagern der Abtriebswelle, der Zwischenwelle und/oder der eintreibenden Welle geführt wird, so dass diese stets ausreichend geschmiert sind, insbesondere beim Anlaufen des Getriebes.

Somit ist der dünnwandig ausgeführte Lagerdeckel 8 als Kühlkörper wirksam, da er auf der Oberseite des Getriebes angeordnet ist und somit dem Kühlluftstrom des auf der eintreibenden Welle oder in einem anderen Ausführungsbeispiel alternativ auf einer Zwischenwelle angeordneten Lüfters ausgesetzt. Durch die Ausbildung des düsenartig ausgeformten Latemenflansches ist ein besonders geringer Strömungswiderstand erreichbar. Die Öffnungen für den Luftdurchtritt sind seitlich angebracht, also in radialer Richtung, so dass die durchtretendes Luft nicht auf die antreibende Vorrichtung, insbesondere also Elektromotor, trifft.

Am zentralen Gehäuseteil 14 sind Wände ausgebildet, die den Öltank begrenzen. Durch den Öltank, der eine geringere Grundfläche aufweist als das Getriebe, insbesondere eine Grundfläche, die weniger als 30% der Grundfläche des Getriebes beträgt, ist es ermöglicht, dass insbesondere auch bei Stillstand des Getriebes das Öl sich im Öltank sammelt und daher ein hoher Ölstand erreichbar ist. Somit ist ein Ansaugrohr einer Ölpumpe 19 stets unter dem Ölstand, also unterhalb der Oberfläche des im Öltank sich befindenden Öls. Ein Ansaugen von Luft ist somit vermieden.

Vom Öltank zur Ölpumpe ist als Ansaugrohr ein Kanal im zentralen Gehäuseteil 14 angeordnet, der aus den Abschnitten 1 und 2 zusammengesetzt ist. Ausgangsseitig ist die Ölpumpe 19 an den Kanal 3 angeschlossen, der in durch die Ausnehmung im Lagerdeckel 8 gebildete Öltasche 21 mündet. Somit wird das warme Öl von der Ölpumpe 19 am Lagerdeckel 8 vorbeigeführt und dabei gekühlt.

Eine der Wände des Öltanks weist Aufnahmen für ein Lager der eintreibenden Welle und ein Lager der Zwischenwelle auf. In der Wand, die vorzugsweise die Oberseite des Öltanks darstellt, und/oder im zentralen Gehäuseteil 14 sind Kanäle eingearbeitet, insbesondere als Bohrungen, so dass Öl aus dem Getriebeinnenraum in den Öltank abfließt. Insbesondere bei Stillsetzen des Getriebes fließt das Öl in den Öltank.

Den Öltank begrenzende Seitenwände weisen an ihrer Außenseite Kühlrippen 30 auf, so dass eine Entwärmung des Öls im Öltank effektiv ermöglicht ist. Die Unterseite des Öltanks ist durch einen mit dem zentralen Gehäuseteil 14 dicht verbundenen Deckel gebildet. Dieser Deckel weist an seiner Außenseite eine oberflächenvergrößernde Welligkeit auf, so dass auch hierdurch die Entwärmung des Öls im Öltank verbessert ist.

Weitere Kühlrippen 31 sind am zentralen Gehäuseteil vorgesehen im Bereich der Lageraufnahme des Lagers 12 der abtreibenden Welle 11.

Somit ist einerseits das Gehäuse des Getriebes möglichst kompakt ausgeführt, wobei durch die Kühlrippenstrukturen und oberflächenvergrößernde Maßnahmen im Wesentlichen ein quaderförmiges Raumvolumen erreicht wird.

Durch die im zentralen Gehäuseteil 14 eingebrachten Bohrungen, welche als Ölkanäle wirksam sind, ist eine verbesserte Wärmeabfuhr vom Öl ans Gehäuse und von dort an die Umgebung erreicht. Insbesondere ist das Öl und das zentrale Gehäuseteil 14 auf möglichst gleichem Temperaturniveau.

Das untere Lager 12 der abtreibenden Welle ist in einer Lageraufnahme des zentralen Gehäuseteils 14 aufgenommen, wobei ein Teilbereich der Lageraufnahme auch eine Wand für den Öltank bildet, also diesen zumindest teilweise begrenzt.

Das zentrale Gehäuseteil ist vorzugsweise zweistückig ausgeführt. Somit sind im unteren Stück die Lageraufnahmen für die Lager (12, 13, 15) und der Öltank angeordnet und im oberen Stück die Lageraufnahmen für die Lager (5, 16, 17), die mittels des auf das obere Stück verbundenen Lagerdeckels 8 abgedeckt sind. Außerdem ist der Laternenflansch auf das obere Stück gesetzt und verbunden.

Das obere Stück des zentralen Gehäuseteils 14 weist an seiner Oberseite einen Bereich mit wellenartiger Ausbreitung auf, so dass auch hier eine oberflächenvergrößernde Struktur vorgesehen ist. Dieser Bereich ist an der Außenseite des Bereichs der Lageraufnahme für das obere Lager 16 angeordnet.

Ein Gehäusedeckel 32 deckt eine Öffnung im zentralen Gehäuseteil ab, so dass eine einfachere Montage ausführbar ist. Dieser Gehäusedeckel 32 weist ebenfalls eine wellenartige äußere Oberfläche als oberflächenvergrößernde Struktur auf.

Wichtig ist dabei auch, dass am unteren Stück des zentralen Gehäuseteils 14 Kühlrippen (30, 31) ausgebildet sind, wobei diese auch auf der Unterseite des Stücks angeordnet sind. Somit ist es ermöglicht, dass die abtreibende Welle 11 einen Lüfter antreibt und der in axialer Richtung angetriebene Luftstrom dann auf die Kühlrippen (30, 31) trifft. Hierdurch ist eine effektive Kühlung der Unterseite des Getriebes ermöglicht und somit insbesondere eine effektive Kühlung des im Öltank sich befindenden Öls und des unteren Lagers der abtreibenden Welle. Der abtriebsseitig erzeugte Luftstrom gelangt aber nur in geringem Umfang an die Oberseite. Daher ist an der eintreibenden Welle der Lüfter 6 aufgesetzt und kühlt den Lagerdeckel 8, so dass das an der Innenseite des Lagerdeckels 8 vorbeiströmende Öl gekühlt wird. Das im Öltank an der unteren Seite und vom Lagerdeckel an der Oberseite gekühlte Öl strömt dann den Lagern und den zu schmierenden Teilen des Getriebes, insbesondere auch den miteinander im Eingriff stehenden Verzahnungsbereichen zu und kühlt diese auch.

Bei weiteren erfindungsgemäßen Ausführungsbeispielen ist die Ölpumpe 19 zusätzlich in Reihe geschaltet mit einem Ölfilter, so dass metallischer Abrieb aus dem Öl herausfilterbar ist. Alternativ oder zusätzlich ist auch im Getriebe, insbesondere im Öltank des Getriebes ein Filter und/oder ein Dauermagnet anordenbar, so dass die metallischen, insbesondere magnetisierbaren, Partikel dort herausfilterbar sind. Zusätzlich oder alternativ sind die vom Getriebeinneren in den Öltank führenden Kanäle mit einem derart geringen Querschnitt ausgeführt, dass entsprechend zu große Partikel herausgefiltert werden. Somit sind die Kanäle als Filterstruktur wirksam.

### Bezugszeichenliste

1 Ölkanalabschnitt
2 Ölkanalabschnitt
3 Ölkanalabschnitt
4 eintreibende Welle
5 Lager
6 Lüfter
7 Ausnehmungen, insbesondere Luftdurchtrittsöffnungen im Laternenflansch
8 Lagerdeckel
9 Anschlussvorrichtung für Fettschmierung
10 Bohrung als Fettkanal
11 abtreibende Welle
12 Lager
13 Lager
14 zentrales Gehäuseteil
15 Lager
16 Lager
17 Lager
18 Gehäuseteil, insbesondere Laternenflansch
19 Ölpumpe
20 Ausnehmung zur Durchführung der eintreibenden Welle
21 Öltasche, Raumbereich für Öl
22 Abdeckung des Wellenendes der Zwischenwelle
23 Nut zur Ölführung
24 Ölkanal
25 Nut zur Ölführung
26 Abdeckung des Wellenendes der abtreibenden Welle
27 Ölkanal
28 Nut zur Ölführung
29 Nut zur Ölführung
30 Kühlrippen
31 Kühlrippen
32 seitlicher Gehäusedeckel mit wellenartiger Struktur zur Oberflächenvergrößerung
33 wellenartige Struktur zur Oberflächenvergrößerung

## Patentansprüche

1. Getriebevorrichtung, insbesondere Getriebe, mit einem zentralen Gehäuseteil (14), in welchem ein erstes Lager (12), insbesondere unteres
Lager (12), einer abtreibenden Welle (11) der Getriebevorrichtung aufgenommen ist,
wobei im zentralen Gehäuseteil (14) zumindest ein erster und ein zweiter Kanal (1, 2, 3) vorgesehen ist, insbesondere jeweils ein aus radial und axial verlaufenden Bohrungsabschnitten zusammengesetzter Kanal, insbesondere mit entsprechend in den Abschnitten angeordneten Verschlussstopfen,
wobei der erste Kanal (1,2) von einem am zentralen Gehäuseteil (14) vorgesehenen Öltank zu einer Anschlussvorrichtung für eine Ölpumpe (19) führt,
wobei der zweite Kanal (3) von einer weiteren Anschlussvorrichtung für die Ölpumpe (19) zu einem Hohlraumbereich (21) führt, welcher vom zentralen Gehäuseteil (14) und einem Lagerdeckel (8) begrenzt ist,
wobei der Lagerdeckel (8) eine axiale Stirnseite der abtreibenden Welle (11) und/oder einer Zwischenwelle gehäusebildend abdeckt,
wobei zwischen Lagerdeckel (8) und zentralem Gehäuseteil (14) der von Öl durchströmte Hohlraumbereich (21), insbesondere Öltasche (21), ausgebildet ist,
wobei am zentralen Gehäuseteil (14) eine ebene Berührfläche ausgebildet ist, in der Bohrungen eingebracht sind und der Lagerdeckel (8) mit seiner entsprechend ebenen Berührfläche auf die ebene Berührfläche des zentralen Gehäuseteils (14) aufgesetzt und mittels in die Bohrungen schraubverbundenen Schrauben verbunden ist,
wobei die ebene Berührfläche des zentralen Gehäuseteils (14) und die ebene Berührfläche an der Innenseite des Lagerdeckels jeweils eine Ausnehmung umfassen, die zumindest ein Teilbereich des Hohlraumbereichs (21) ist, welchen zumindest der innerhalb des zentralen Gehäuseteil (14) verlaufende weite (3) Kanal mündet,
wobei die Ausnehmung im zentralen Gehäuseteil (14) als Vertiefung in die ebene Berührfläche des zentralen Gehäuseteils (14) eingebracht ist,
wobei die ebenen Berührflächen des zentralen Gehäuseteils (14) und des Lagerdeckels eine weitere Bohrung (20), insbesondere durch den Lagerdeckel (8) und/oder das zentrale Gehäuseteil (14) durchgehende weitere Bohrung (20), aufweisen zur Durchführung einer eintreibenden Welle (4),
wobei die weitere Bohrung (20) beabstandet ist von der Ausnehmung.

2. Getriebevorrichtung nach Anspruch 1,
**dadurch gekennzeichnet, dass**
auf der eintreibenden Welle (4) ein Lüfter (6) formschlüssig und/oder kraftschlüssig verbunden ist, dessen Kühlluftstrom am Lagerdeckel (8) vorbeiströmt,
insbesondere wobei der Kühlluftstrom durch Ausnehmungen (7) eines Laternenflansch durchtritt,
insbesondere in zur eintreibenden Welle (4) radialer Richtung, insbesondere wobei der Laternenflansch mit dem zentralen Gehäuseteil (14) der Getriebevorrichtung verbunden ist und an seiner von der Getriebevorrichtung abgewandten Seite mit einem Motorgehäuse eines die eintreibende Welle (4) antreibenden Motors verbunden ist.

3. Getriebevorrichtung nach mindestens einem der vorangegangenen Ansprüche, **dadurch gekennzeichnet, dass**
im zentralen Gehäuseteil (14) ein weiterer Kanal (10) vorgesehen ist,
wobei der weitere Kanal von einer ersten Seite, insbesondere Oberseite, der Getriebevorrichtrung zu einem Lageraufnahme bereich des ersten Lagers (12) führt,
wobei das erste Lager (12) fettgeschmiert ist, wobei eine Nachschmierung durch Einleitung von Fett in einen Mündungsbereich (9) an einer Oberseite der Getriebevorrichtung ausführbar ist.

4. Getriebevorrichtung nach Anspruch 3,
**dadurch gekennzeichnet, dass**
die abtreibende Welle (11) über ein zweites Lager (16) gelagert ist, insbesondere dessen Lageraufnahme im zentralen Gehäuseteil (14) angeordnet ist, wobei das zweite Lager (16) axial zwischen dem Mündungsbereich (9) des weiteren Kanals (10) auf der ersten Seite und dem ersten Lager (12) angeordnet ist.

5. Getriebevorrichtung nach Anspruch 3 oder 4,
**dadurch gekennzeichnet, dass** der Lageraufnahmebereich des ersten Lagers (12) im zentralen Gehäuseteil (14) auf der der ersten Seite gegenüberliegenden Seite angeordnet ist, also einen Abschnitt der dortigen Außenwand der Getriebevorrichtung umfasst.

6. Getriebevorrichtung nach mindestens einem der Ansprüche 3-5, **dadurch gekennzeichnet, dass**
das zentrale Gehäuseteil (14) zweistückig ausgeführt ist, wobei ein oberes auf ein unteres Stück aufgesetzt und verbunden ist,
wobei der weitere Kanal vom oberen Stück ins untere Stück durchgeführt ist, insbesondere wobei am oberen und/oder unteren Stück Zentriermittel angeordnet sind zum verbesserten Ausrichten des oberen zum unteren Stück, und
insbesondere wobei das zentrale Gehäuseteil (14) zumindest ein weiteres Lager von einer anderen Welle der Getriebevorrichtung aufnimmt

7. Getriebevorrichtung nach mindestens einem der vorangegangenen Ansprüche,
**dadurch gekennzeichnet, dass**
im Getriebegehäuse der Öltank angeordnet ist, der zumindest teilweise begrenzt ist durch das zentrale Gehäuseteil (14) und einen Gehäusedeckel, der mit dem zentralen Gehäuseteil (14) verbunden ist, insbesondere abgedichtet und schraubverbunden ist.

8. Getriebevorrichtung nach mindestens einem der vorangegangenen Ansprüche,
**dadurch gekennzeichnet, dass**
die Getriebevorrichtung derart montiert ist in einer Maschine oder Anlage, insbesondere Kühlturmanlage, dass die abtreibende Welle (11) nach unten, also in Gravitationsrichtung, herausragt aus einem Gehäuse der Getriebevorrichtung.

9. Getriebevorrichtung nach mindestens einem der Ansprüche 7 oder 8, **dadurch gekennzeichnet, dass**
der Öltank durch das zentrale Gehäuseteil (14) und den mit diesem dicht verbundenen Gehäusedeckel begrenzt ist.

10. Getriebevorrichtung nach mindestens einem der vorangegangenen Ansprüche, **dadurch gekennzeichnet, dass** im zentralen Gehäuseteil (14) zusätzliche Kanäle ausgebildet sind, die von einem Getriebeinnenraum in den Öltank münden,
insbesondere wobei die zusätzlichen Kanäle jeweils aus Bohrungsabschnitten, insbesondere axial, also parallel zur Achsrichtung der abtreibenden Welle (11), und hierzu transversal verlaufenden Bohrungsabschnitten, zusammengesetzt sind.

11. Getriebevorrichtung nach mindestens einem der vorangegangenen Ansprüche, **dadurch gekennzeichnet, dass**
aus dem Hohlraumbereich (21) weitere zusätzliche Kanäle zu zu schmierenden und/oder zu kühlenden Bereichen in einem Innenraum der Getriebevorrichtung führen.

12. Getriebevorrichtung nach Anspruch 2,
**dadurch gekennzeichnet, dass**
der Kühlluftstrom des Lüfters (6) durch Ausnehmungen (7) eines Laternenflansch durchtritt, insbesondere in zur eintreibenden Welle (4) radialer Richtung,
insbesondere wobei der Laternenflansch mit dem zentralen Gehäuseteil (14) der Getriebevorrichtung verbunden ist und an seiner von der Getriebevorrichtung abgewandten Seite mit einem Motorgehäuse verbunden ist.

13. Getriebevorrichtung nach mindestens einem der vorangegangenen Ansprüche, **dadurch gekennzeichnet, dass**
das untere Stück des zentralen Gehäuseteils (14) an seiner Unterseite Kühlrippen (30, 31) aufweist, insbesondere wobei an einer den Öltank zumindest teilweise begrenzenden Wand des unteren Stücks Kühlrippen (30, 31) ausgebildet sind und/oder wobei an einer die Lageraufnahme des ersten lagers (12) zumindest teilweise begrenzenden Wand des unteren Stücks Kühlrippen (30, 31) ausgebildet sind.

14. Getriebevorrichtung mindestens nach Ansprüchen 2 und 6, **dadurch gekennzeichnet, dass**
an der Außenseite des Lagerdeckels eine wellenartige Struktur(33) als oberflächenvergrößernder Bereich ausgebildet ist, die im Kühlluftstrom des Lüfters (6) angeordnet ist
und/oder dass
an einer Oberseite des oberen Stücks eine wellenartige Struktur(33) als oberflächenvergrößernder Bereich ausgebildet ist.

15. Getriebevorrichtung mindestens nach Anspruch 6 **dadurch gekennzeichnet, dass**
am zentralen Gehäuseteil (14), insbesondere an einem Eckbereich des quaderförmig ausgebildeten unteren Stücks, insbesondere am unteren Stück, ein Befestigungsbereich einstückig ausgeformt ist, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil einer die Getriebevorrichtung aufnehmenden Anlage oder Maschine verbindbar ist.

## Claims

1. A transmission assembly, in particular transmission,
with a central housing part (14), in which a first bearing (12), in particular lower bearing (12), of an output shaft (11) of the transmission assembly is received,
wherein at least a first and a second duct (1, 2; 3) is provided in the central housing part (14), in particular in each case a duct composed of bore portions running radially and axially, in particular with stoppers arranged correspondingly in the portions,
wherein the first duct (1, 2) leads from an oil tank provided on the central housing part (14) to a connection device for an oil pump (19),
wherein the second duct (3) leads from a further connection device for the oil pump (19) to a cavity region (21) which is bounded by the central housing part (14) and a bearing cover (8),
wherein the bearing cover (8) covers an axial end face of the output shaft (11) and/or an intermediate shaft in housing-forming manner,
wherein the cavity region (21) through which oil flows, in particular oil pocket (21), is formed between the bearing cover (8) and the central housing part (14),
wherein a flat contact face is formed on the central housing part (14), in which face bores are formed and the bearing cover (8) is placed with its correspondingly flat contact face on the flat contact face of the central housing part (14) and is connected by means of screws screw-connected into the bores,
wherein the flat contact face of the central housing part (14) and the flat contact face on the inner side of the bearing cover in each case comprise a recess which is at least a partial region of the cavity region (21) into which at least the second duct (3) running within the central housing part (14) opens,
wherein the recess in the central housing part (14) is introduced into the flat contact face of the central housing part (14) as a depression,
wherein the flat contact faces of the central housing part (14) and of the bearing cover have a further bore (20), in particular a further bore (20) which passes through the bearing cover (8) and/or the central housing part (14), for passing through an input shaft (4),
wherein the further bore (20) is spaced apart from the recess.

2. A transmission assembly according to Claim 1,
**characterised in that**
a fan (6) is connected on the input shaft (4) in a positively and/or non-positively locking manner, the cooling air flow of which fan flows past the bearing cover (8),
in particular the cooling air flow passing through recesses (7) in a flange,
in particular in a direction radial to the input shaft (4), in particular the flange being connected to the central housing part (14) of the transmission assembly and being connected on its side remote from the transmission assembly to a motor housing of a motor which drives the input shaft (4).

3. A transmission assembly according to at least one of the preceding claims, **characterised in that**
a further duct (10) is provided in the central housing part (14),
the further duct leading from a first side, in particular upper side, of the transmission assembly to a bearing-receptacle region of the first bearing (12),
the first bearing (12) being grease-lubricated, it being possible to carry out relubrication by introducing grease into an opening region (9) on an upper side of the transmission assembly.

4. A transmission assembly according to Claim 3,
**characterised in that**
the output shaft (11) is mounted via a second bearing (16), in particular the bearing receptacle thereof is arranged in the central housing part (14), the second bearing (16) being arranged axially between the opening region (9) of the further duct (10) on the first side and the first bearing (12).

5. A transmission assembly according to Claim 3 or 4,
**characterised in that**
the bearing-receptacle region of the first bearing (12) is arranged in the central housing part (14) on the side located opposite the first side, i.e. comprises a portion of the outer wall of the transmission assembly there.

6. A transmission assembly according to at least one of Claims 3 - 5, **characterised in that**
the central housing part (14) is designed in two pieces, an upper piece being placed on and connected to a lower piece,
the further duct being carried through from the upper piece into the lower piece,
in particular with centring means being arranged on the upper and/or lower piece for improved alignment of the upper piece relative to the lower piece, and
in particular the central housing part (14) receiving at least one further bearing of another shaft of the transmission assembly.

7. A transmission assembly according to at least one of the preceding claims, **characterised in that**
the oil tank is arranged in the transmission housing, which tank is at least partially bounded by the central housing part (14) and a housing cover which is connected, in particular sealed and screw-connected, to the central housing part (14).

8. A transmission assembly according to at least one of the preceding claims, **characterised in that**
the transmission assembly is mounted in a machine or installation, in particular cooling-tower installation, such that the output shaft (11) projects downwards, i.e. in the direction of gravity, out of a housing of the transmission assembly.

9. A transmission assembly according to at least one of Claims 7 or 8, **characterised in that**
the oil tank is bounded by the central housing part (14) and the housing cover which is connected hermetically thereto.

10. A transmission assembly according to at least one of the preceding claims, **characterised in that**
additional ducts are formed in the central housing part (14), which ducts from an inner space of the transmission open into the oil tank,
in particular the additional ducts in each case being composed of bore portions, in particular bore portions running axially, i.e. parallel to the axial direction of the output shaft (11), and transversely thereto.

11. A transmission assembly according to at least one of the preceding claims, **characterised in that**
further additional ducts lead out of the cavity region (21) to regions in an inner space of the transmission assembly which are to be lubricated and/or to be cooled.

12. A transmission assembly according to Claim 2,
**characterised in that**
the cooling air flow of the fan (6) passes through recesses (7) in a flange, in particular in a direction radial to the input shaft (4),
in particular the flange being connected to the central housing part (14) of the transmission assembly and being connected to a motor housing on its side remote from the transmission assembly.

13. A transmission assembly according to at least one of the preceding claims, **characterised in that**
the lower piece of the central housing part (14) has on its underside cooling ribs (30, 31), in particular with cooling ribs (30, 31) being formed on a wall of the lower piece which at least partially bounds the oil tank, and/or with cooling ribs (30, 31) being formed on a wall of the lower piece which at least partially bounds the bearing receptacle of the first bearing (12).

14. A transmission assembly at least according to Claims 2 and 6,
**characterised in that**
a corrugation-like structure (33) is formed on the outside of the bearing cover as a surface-increasing region, which structure is arranged in the cooling air flow of the fan (6),
and/or **in that**
a corrugation-like structure (33) is formed on an upper side of the upper piece as a surface-increasing region.

15. A transmission assembly at least according to Claim 6,
**characterised in that**
on the central housing part (14), in particular on a corner region of the cuboid lower piece, in particular on the lower piece, a fastening region is formed in one piece, which region extends in the lateral, i.e. radial, direction such that a continuous bore which runs in the axial direction is introduced, so that a connecting screw can be passed through in the axial direction and can be connected to a fixed part of an installation or machine which receives the transmission assembly.

## Revendications

1. Dispositif de transmission, en particulier boîte de vitesses,
comprenant une partie centrale de carter (14) dans laquelle est logé un premier palier (12), en particulier un palier inférieur (12), un arbre de sortie (11) du dispositif de transmission,
dans lequel au moins un premier et un deuxième canal (1,2; 3) sont prévus dans la partie centrale de carter (14), en particulier chaque fois un canal composé de sections d'alésage s'étendant radialement et axialement, en particulier avec des bouchons de fermeture disposés de façon correspondante dans les sections,
dans lequel le premier canal (1, 2) conduit d'un réservoir d'huile prévu sur la partie centrale de carter (14) à un dispositif de raccordement pour une pompe à huile (19),
dans lequel le deuxième canal (3) conduit d'un dispositif de raccordement pour la pompe à huile (19) à une zone de cavité (21) qui est délimitée par la partie centrale de carter (14) et un chapeau de palier (8),
dans lequel le chapeau de palier (8) recouvre en formant carter une face frontale axiale de l'arbre de sortie (11) et/ou d'un arbre intermédiaire,
dans lequel la zone de cavité (21), en particulier une poche d'huile (21), parcourue par de l'huile est formée entre le chapeau de palier (8) et la partie centrale de carter (14),
dans lequel une surface de contact plane est formée sur la partie centrale de carter (14), dans laquelle sont ménagés des alésages et le chapeau de palier (8) est posé par sa surface de contact plane correspondante sur la surface de contact plane de la partie centrale de carter (14) et reliée à celle-ci au moyen de vis engagées par vissage dans les alésages,
dans lequel la surface de contact plane de la partie centrale de carter (14) et la surface de contact plane sur le côté intérieur du chapeau de palier comprennent chacune un évidement qui est au moins une zone partielle de la zone de cavité (21) dans laquelle débouche au moins le deuxième canal (3) s'étendant dans la partie centrale de carter (14),
dans lequel l'évidement dans la partie centrale de carter (14) est réalisé sous la forme d'un renfoncement dans la surface de contact plane de la partie centrale de carter (14),
dans lequel les surfaces de contact planes de la partie centrale de carter (14) et du chapeau de palier présentent un autre alésage (20), en particulier un autre alésage (20) passant à travers le chapeau de palier (8) et/ou la partie centrale de carter (14), pour le passage d'un arbre d'entrée (4),
dans lequel l'autre alésage (20) est espacé de l'évidement.

2. Dispositif de transmission selon la revendication 1,
**caractérisé en ce**
**qu'**un ventilateur (6) est relié par complémentarité de force et/ou par conjugaison de forces sur l'arbre d'entrée (4), dont le courant d'air de refroidissement balaye le chapeau de palier (8),
en particulier le courant d'air de refroidissement passant à travers des évidements (8) d'une bride lanterne,
en particulier en direction radiale par rapport à l'arbre d'entrée (4), en particulier la bride lanterne étant reliée à la partie centrale de carter (14) du dispositif de transmission et reliée sur son côté éloigné du dispositif de transmission à un carter de moteur d'un moteur qui entraîne l'arbre d'entrée (4).

3. Dispositif de transmission selon au moins l'une des revendications précédentes, **caractérisé en ce**
**qu'**un autre canal (10) est prévu dans la partie centrale de carter (14),
l'autre canal conduisant d'un premier côté, en particulier du côté supérieur, du dispositif de transmission à une zone de logement de palier du premier palier (12),
le premier palier (12) étant lubrifié à la graisse, un regraissage étant réalisable par introduction de graisse dans une zone de débouché (9) sur un côté supérieur du dispositif de transmission.

4. Dispositif de transmission selon la revendication 3,
**caractérisé en ce**
**que** l'arbre de sortie (11) est monté sur un deuxième palier (16), en particulier dont le logement de palier est disposé dans la partie centrale de carter (14), le deuxième palier (16) étant disposé axialement entre la zone de débouché (9) de l'autre canal (10) du premier côté et le premier palier (12).

5. Dispositif de transmission selon la revendication 3 ou 4,
**caractérisé en ce**
**que** la zone de logement de palier du premier palier (12) est disposée dans la partie centrale de carter (14) sur le côté opposé au premier côté et comprend donc une section de la paroi extérieure du dispositif de transmission.

6. Dispositif de transmission selon au moins l'une des revendications 3 à 5,
**caractérisé en ce**
**que** la partie centrale de carter (14) est réalisée en deux parties, une partie supérieure étant posée et fixée sur une partie inférieure,
l'autre canal étant conduit de la partie supérieure dans la partie inférieure,
en particulier des moyens de centrage étant disposés sur la partie supérieure et/ou inférieure pour améliorer l'alignement de la partie supérieure avec la partie inférieure, et en particulier la partie centrale de carter (14) recevant au moins un autre palier d'un autre arbre du dispositif de transmission.

7. Dispositif de transmission selon au moins l'une des revendications précédentes, caractérisé en ce
le réservoir d'huile est disposé dans le carter de transmission et délimité au moins partiellement par la partie centrale de carter (14) et un couvercle de carter qui est relié à la partie centrale de carter (14), en particulier de manière étanche et par vissage.

8. Dispositif de transmission selon au moins l'une des revendications précédentes, **caractérisé en ce**
**que** le dispositif de transmission est monté dans une machine ou installation, en particulier une installation de tour de refroidissement, de telle façon que l'arbre de sortie (11) dépasse vers le bas, donc dans le sens de la gravitation, d'un carter du dispositif de transmission.

9. Dispositif de transmission selon au moins l'une des revendications 7 ou 8, **caractérisé en ce**
**que** le réservoir d'huile est délimité par la partie centrale de carter (14) et le couvercle de carter relié à celle-ci de manière étanche.

10. Dispositif de transmission selon au moins l'une des revendications précédentes, **caractérisé en ce**
**que** des canaux supplémentaires sont formés dans la partie centrale de carter (14), lesquels débouchent d'un volume intérieur de transmission dans le réservoir d'huile,
en particulier les canaux supplémentaires étant chacun composés de sections d'alésage, en particulier de sections d'alésage s'étendant axialement, donc parallèlement à la direction de l'axe de l'arbre de sortie (11), et transversalement à celle-ci.

11. Dispositif de transmission selon au moins l'une des revendications précédentes, **caractérisé en ce**
**que** d'autres canaux supplémentaires conduisent de la zone de cavité (21) à des zones à lubrifier et/ou à refroidir dans un volume intérieur du dispositif de transmission.

12. Dispositif de transmission selon la revendication 2,
**caractérisé en ce**
**que** le courant d'air de refroidissement du ventilateur (6) passe à travers des évidements (7) d'une bride lanterne, en particulier en direction radiale par rapport à l'arbre d'entrée (4),
en particulier la bride lanterne étant reliée à la partie centrale de carter (14) du dispositif de transmission et reliée sur son côté éloigné du dispositif de transmission à un carter de moteur.

13. Dispositif de transmission selon au moins l'une des revendications précédentes, **caractérisé en ce**
**que** la partie inférieure de la partie centrale de carter (14) présente sur son côté intérieur des ailettes de refroidissement (30, 31), en particulier des ailettes de refroidissement (30, 31) étant formées sur une paroi de la partie inférieure qui délimite au moins partiellement le réservoir d'huile et/ou des ailettes de refroidissement (30, 31) étant formées sur une paroi de la partie inférieure qui délimite au moins partiellement le logement de palier du premier palier (12).

14. Dispositif de transmission selon au moins les revendications 2 et 6,
**caractérisé en ce**
**qu'**une structure ondulée (33) est formée en tant que zone d'augmentation de la surface sur le côté extérieur du chapeau de palier, laquelle est disposée dans le courant d'air de refroidissement du ventilateur (6)
et/ou
**qu'**une structure ondulée (33) est formée en tant que zone d'augmentation de la surface sur un côté supérieur de la partie supérieure.

15. Dispositif de transmission selon au moins la revendication 6,
**caractérisé en ce**
**qu'**une zone de fixation est formée d'une seule pièce sur la partie centrale de carter (14), en particulier sur une zone de coin de la partie inférieure de forme parallélépipédique, en particulier sur la partie inférieure, laquelle s'étend en direction latérale, donc radiale, de façon à réaliser un alésage traversant s'étendant en direction axiale, de sorte qu'une vis de liaison puisse être passée à travers en direction axiale et reliée à une partie fixe d'une installation ou machine recevant le dispositif de transmission.
